# EUROPEAN PATENT APPLICATION

(11) **EP 4 570 366 A1**
(43) Date of publication of application: **18.06.2025**
(21) Application number: 23217348.4
(22) Date of filing: 15.12.2023
(51) Int. Cl.: B01F 23/233, B01F 23/53, B01F 23/80, B01F 27/271, B01F 27/41, B01F 33/80, B02C 17/00, B02C 13/20

(54) **APPARATUSES AND METHODS FOR PRODUCING NANOPARTICLES FROM MATERIAL IN WORKING LIQUID**

(71) Applicant: Licitar, Antonijo, 10000 Zagreb (HR)
(72) Inventor: Licitar, Antonijo, 10000 Zagreb (HR)
(74) Representative: Bardehle Pagenberg S.L.

(57) **Abstract**

The present disclosure relates to apparatuses for producing nanoparticles from a material mixed with a working liquid and optionally to produce hydrogen, and to top-down methods for producing nanoparticles and optionally hydrogen using such apparatuses. A core of such an apparatus comprises a first disc (11) and a second disc (12) including holes (7) arranged in concentric rings (16) and channel portions (18) between those rings. The first disc and the second disc are arranged such that the channels of each disc face the rings of the other disc.

## Description

### TECHNICAL FIELD

The present disclosure relates to apparatuses for producing nanoparticles, and to top-down methods for producing nanoparticles using such apparatuses. The apparatuses of the present disclosure are configured to operate with liquid materials. For example, the apparatus may process a working liquid comprising solid material, e.g. micron sized material or even material up to a few millimeters in size. The working liquid and the solid material may for example form a dispersion or a slurry.

### BACKGROUND

Nanoparticles generally have at least one of their dimensions, optionally all their dimensions, between 1 nm and 100 nm. As the surface area to volume ratio of the material becomes significant in the nanoscale, the properties of the nanoparticles may be different from the properties of larger particles. Nanoparticles are used in a wide range of fields, for example medicine, electronics, materials science and others.

Current methods of producing these materials often involve bottom-up processes or production methods that require the use of chemicals and high energy consumption. These processes may be time-consuming and expensive.

One known top-down approach involves a mechanical mill, disclosed in US 11154868 B2 and US 11607693 B2. In these documents, two rotors including aerodynamical blades which can be rotated in opposite directions are referred to. However, it has been discovered that these designs are actually not capable of producing more than 5% nanoparticles from the input material. Also, blade damage and abrasion actually occur. The input material collides with the blades, breaking down due to the collisions with the blades and also deteriorating the blades. The material removed from the blades may contaminate the environment and may cause the nanoparticles to comprise impurities.

The above mentioned mechanical mill was not configured to work with liquid materials either.

The present disclosure aims at resolving, or at least reducing one or more of the above mentioned disadvantages.

### SUMMARY

In an aspect of the present disclosure, an apparatus for producing nanoparticles of a material mixed in a working liquid is provided. The apparatus comprises one or more inlets for introducing the working liquid containing the material or the material and the liquid separately into the apparatus. The apparatus further comprises a core for accelerating the working liquid containing the material to cause a cavitation effect and changing flow direction of the working liquid to cause a water hammer effect for producing nanoparticles of the material. The core comprises a first disc and a second disc facing the first disc in an axial direction. The apparatus comprises one or more drives for rotating the first disc and/or the second disc. The first disc and the second disc comprise a plurality of concentric rings and a plurality of concentric channels alternately interleaved with the plurality of concentric rings. The first disc and the second disc comprise a plurality of holes extending from the concentric channels and the concentric rings. The holes extend at an angle of between 2° and 89° with respect to the axial direction. The concentric rings of the first disc are arranged facing the channels of the second disc, and the concentric rings of the second disc are arranged facing the channels of the first disc.

Therefore, in a disc of the core, rings are alternated with channels. And there is a difference in height, herein measured along the axial direction of the core, between the base of a channel and the base of a ring. The rings and the channels are provided with holes which are inclined with respect to the axial direction of the core.

Therefore, when at least one of the first disc and the second disc is rotated, the working liquid is accelerated, and a cavitation effect and a water hammer effect can be achieved for reducing a size of the material mixed in the working liquid. The cavitation effect and the water hammer effect also help to collide solid material with itself. When the working liquid is accelerated, low pressure regions may arise and vapor bubbles, also known as cavities or voids, may be formed in the low pressure regions. Some solid material may be trapped inside the bubbles. In particular, the vapor bubbles form when the pressure of the liquid is reduced below the vapor pressure of the liquid. When the bubbles reach regions of higher pressure, they collapse and produce shock waves. The solid material inside and near the bubbles may therefore be reduced to a smaller size due to the shock waves and due to collision with itself. Such a cavitation effect may specifically occur within and/or near the holes of the discs. The holes in the rings and channels may promote the formation of bubbles.

Also, when the working liquid is accelerated and its direction of flow changes suddenly, e.g. due the presence of the rings and channels as well as in particular of the presence of the holes, a pressure wave is produced. The pressure wave may help to break down the solid material as well as to promote that it collides with itself. In this regard, the pressure waves may cause a turbulent flow, which may enhance material collision. The water hammer effect, also known as hydraulic shock, may therefore also help to reduce a size of the solid material inside the working liquid.

The rotation of at least one of the discs may also cause the solid material in the working liquid to collide against itself, thereby reducing its size. For example, collisions of material with itself may be in a region between a channel and a ring.

The holes may have a substantially elliptical cross-section. This cross-section is taken perpendicular to the axial direction of the discs. The elliptical cross-sectional shape may be particularly suitable for promoting and enhancing the water hammer and the cavitation effects.

In some examples, the holes may extend at an angle of between 20° and 80° with respect to the axial direction, and specifically at an angle between 25° and 75°. These ranges of angles may work particularly well for promoting and enhancing the water hammer and the cavitation effects too. Also, an angle of the holes with respect to an axial direction may increase in a radially outward direction of one or both discs. The holes in the rings and the holes in the channel portions may have different inclinations in some examples.

The holes may be blind holes. I.e., a hole does not extend through the corresponding disc. Liquid (mixed with solid particles) may be drawn into the hole and expelled out. In these examples, the first disc and/or the second disc may further comprise an opening close to a center, e.g. in a center, of the corresponding disc for introducing the working liquid between the first disc and the second disc. Therefore, when the first disc and/or the second disc are rotated, the working liquid may advance radially outwards.

In some examples, the material may therefore be dragged between the disc from one axial side of the core, from the other axial side of the core, or even from both axial sides of the core. In some examples, elements for suitably introducing and outputting a material into and out of the core may be provided at the entrance and at the exit of the core. For example, tubes and valves may be provided. Other elements for helping to transport the material such as pumps may be provided. For example, centrifugal pumps, membrane pumps and/or tesla pumps may be used.

In other examples, the holes may be through holes. In such examples, the working liquid may be introduced into a housing of the core from a first axial side of the housing. The working liquid may then travel through the holes of the discs, e.g. through the first disc, from the first disc to the second disc and through the second disc. The working liquid may also travel in the opposite direction, i.e. through the second disc, towards the first disc and through the first disc.

The working liquid may be a dispersion or a slurry. The working liquid may comprise one or more gases in some examples. In these or other examples, one or more gases may be mixed with the working liquid inside the apparatus, e.g. inside the core. The working liquid may comprise or may be water, but other working liquids may also be used. For example, fuels such as diesel, bio diesel and gasoline may also be used as working liquid. The solid material within the working liquid may be micron sized, e.g. of a few or tens or hundreds of microns. The solid material may also have other suitable sizes, e.g. of less than one micron. For example, apparatuses having a single stage, i.e. a single pair of discs, may be able to operate with solid material below 200 microns. If the apparatuses have more than one stage, solid material may even reach millimeter size. In some examples, the working liquid may comprise mineral salts and/or biological material. The working liquid may comprise catalysts or additives in some examples such as C, Ni, KOH and others. The apparatus of the current aspect may be able to operate with more materials, a broader range of material sizes, and increased amounts of material.

In some examples, the working liquid containing the material may be introduced in the apparatus as such. In other examples, the working liquid and the material may be introduced separately in the apparatus, and mixed in the apparatus before feeding it to the core. The apparatus may comprise one or more mixing chambers in which the material may be mixed with the working liquid. A magnetic stirrer, or in general any suitable stirrer or element may be used to mix the working liquid and the material.

In some examples, both discs may be rotated. For example, the drives may be configured to rotate the first disc in a first direction and the second disc in a second direction opposite to the first direction. This may help to promote collisions of the solid material within the working liquid. In other examples, both discs may be rotated in the same direction, but at different rotational speeds. Still in other examples, one of the discs may be rotated, while the other is static, i.e. not rotated. Rotation of at least one disc may be performed at over 25.000 revolutions per minute (rpm) in some examples, optionally above 40.000 rpm, e.g. about 45.000 rpm or more.

A radius of the first disc and the second disc may be from 100 mm or 150 mm to 1500 mm or more. In some examples, one of the discs may have at least 5 channels and the other disc may have at least four channels.

Suitable drives or actuators may be provided for rotating at least one of the discs. For example, one or more motors, a gas-powered system, an electromagnetically powered system and others may be used for causing rotation. In some examples, a flywheel may be connected to the disc(s) to be rotated for reducing stress during operation.

As a working liquid is to be introduced in the core, the core should be liquid tight for avoiding leakages and damage to the surrounding elements of the apparatus. A non-contact coupling between a drive for rotating a shaft and the shaft connected to the corresponding disc may be provided. A suitable non-contact coupling may be a magnetic coupling. A magnetic coupling may for example include permanent magnets or electromagnets. A non-contact coupling may help to avoid or at least reduce the risk of having liquid or humidity leaking from the core reaching and damaging the drive. As lubricants may be dispensed with and due to less friction due to the non-contact coupling, a non-contact coupling may also help to have a smoother operation and to transfer the energy from the drive to the shaft more efficiently.

In some examples, at least one of the discs may be rotated with a hydraulic system or a pneumatic system. In examples in which a pneumatic system is provided to rotate a disc, a gas which is, or will be, introduced into the core may also be a gas which is used to drive the disc, and the core may be slightly under pressurized with respect to the pneumatic system. In this manner, leakage of the working liquid inside the core may be avoided or at least reduced due to the pressure difference between the core and the pneumatic system. And if gas from the pneumatic system enters the core, contamination may be avoided as the gas in the pneumatic system and inside the core is the same. In some examples, two tanks of a same gas, e.g. an inert gas or any suitable gas, may be provided. Gas from one of the tanks may be introduced into the core, e.g. such that it is dissolved within the working liquid, while gas from the other tank may be used to drive the pneumatic drive. In some examples, the pneumatic system may comprise a turbine and a compressor, such that the gas from the corresponding tank may be compressed and used to move the turbine, and therefore to move the corresponding shaft and disc.

In some examples, a pitch of the holes of the first and/or the second disc increases from a radially most inner channel towards a radially most outer channel of the respective disc. This can help to create a lower pressure at an outer radial portion of the discs, suck the working material to an inside of the core and accelerate it, and to cause that an angular rotational speed of the material between the discs increases towards an outer radial direction of the core. Breaking down the solid material to a desired size may be performed efficiently. Such a configuration may particularly be applicable to an apparatus having one or more discs with an opening close to a center of the discs for introducing the working liquid.

In some examples, a size of the through-holes of the first and/or the second disc decreases from a most radially inner portion towards a most radially outer portion of the respective disc. Similarly, this may help the working liquid to advance radially outwards, at least in the examples where the holes are blind holes.

In some examples, the first disc and the second disc may comprise a ceramic material. In particular, the first disc and the second disc may be made of a ceramic material. A ceramic coating may be provided in other examples. For example, the discs may be made of a steel body and may be coated with a ceramic coating. Accelerating and crushing solid material which may show magnetic effects during the use of the core, e.g. material including metals such as iron, may be particularly difficult to handle if the first and second discs for example comprise, or are made of, metallic materials. Using ceramic materials for the discs can help to accelerate and suitably deal with such kind of materials.

In some examples, the core may further comprise a housing enclosing the first disc and the second disc. In some examples, the housing may comprise one or more elements, e.g. conduits or tubes, for introducing one or more fluids, e.g. gases, which may be mixed with the working liquid. The housing of the collider may also comprise one or more elements for adjusting one or more conditions in the core. For example, temperature and pressure within the core may be adjusted with suitable elements or tools. These elements or tools may also be provided separate from the core.

The working liquid, optionally containing already the solid material, may therefore be introduced in the apparatus and guided to the core. Also, the working liquid with the material of smaller size may be extracted from the core and guided away from it, e.g. through the apparatus.

The apparatus may further comprise a separator system for separating the solid material from the working liquid. Such a system may for example be a centrifugal separator. In some of these examples, this system may be configured to generate an under pressure for removing the working material from the core. Other systems such as a system including gravity separation or a system including electro potential separation (using e.g. static electricity) may also be used.

When the nanoparticles have a desired size, they may be removed from the apparatus. In some examples, they may be collected in a collection system or "collector system" included in the apparatus, and then removed from the apparatus. The collection system may in some examples include one or more glove boxes, i.e. hermetically sealed enclosures for ensuring stability, providing a controlled environment for the nanoparticles and avoiding contamination. A collection system, which may comprise one or more valves, may be connected to the outlet of the separator system. If the apparatus comprises a plurality of cores, see below, a plurality of collection systems may be provided, e.g. the collection systems may be connected to the outlets of a plurality of separator systems, such that nanoparticles may be collected and packaged, e.g. palletized, after the working liquid has been removed from each core.

The apparatus may be configured to pass the material through the core more than once. If after a colliding process in the core, there is material which does not have the desired dimensions, e.g. on the nanoscale, this material which does not yet have the desired size may be caused to go through the core again. This process may be repeated a plurality of times.

In some examples, the apparatus may further comprise a system for generating an under pressure or "vacuum" for removing the working liquid from the core once the solid material has a smaller size. After passing through the core, the liquid may be or have a high proportion of gas/vapor/steam. A suitable and efficient manner for removing the working liquid/gas from the core is the use of a vacuum. A vacuum may herein be regarded as a significantly lower pressure than the working pressure in the core.

Vacuum may also be generated for preparing an atmosphere inside the apparatus before introducing the working liquid. For example, an inside of the apparatus may be washed and then vacuum may be applied for achieving a suitable atmosphere in the apparatus before introducing the working liquid, see also below. Besides generating vacuum, or alternatively, one or more gases, e.g. inert gases, may be introduced into the apparatus for preparing the atmosphere. The level of oxygen inside the apparatus may also be controlled.

The apparatus may further comprise a system for controlling an atmosphere within a path of the apparatus through which the working liquid is to travel. For example, the system may be configured to introduce a fluid, optionally a gas, in the apparatus for modifying an atmosphere within the apparatus. Introducing nitrogen may help to regulate a level of oxygen within the apparatus. Argon is another fluid which may help to create a desired and controlled environment in some examples. The system may additionally or alternatively be configured to create vacuum within the apparatus. For example, a vacuum pump may be provided. A controlled suitable atmosphere for the production of nanoparticles may be achieved. The apparatus may further comprise a drying system and/or a dehumidifying system.

The apparatus may further comprise a controller. The controller may be configured to control, e.g. manage and coordinate, the operation of the apparatus. The controller may have one or more processors and one or more memories with instructions which may be executed by the one or more processors. The apparatus may further comprise a plurality of sensors which may be communicatively coupled (through wires or wireless) to the controller at least in some examples. Examples of sensors may be temperature sensors, humidity sensors, pressure sensors and others. The measurements of the sensors may help to precisely control and adjust the operation of the apparatus in real time.

The apparatus may further comprise a plurality of valves which may be selectively and controllably opened and closed for suitably operating the apparatus. Valves may help to control a flow through a fluid path within the apparatus. They may also help to regulate pressure. The apparatus may further comprise one or more pressure compensators, and/or one or more pressure expanders.

The apparatus may comprise one core or a plurality of cores. The core may therefore be referred to as a single stage core (one core) or a multistage core (plurality of cores). If the core is a multistage core, there may be a plurality of pairs of discs, each pair comprising a first disc and a second disc as described herein. In some examples, all the first discs may be driven using a single actuator/drive such as a motor, and all the second discs may be driven by another actuator, e.g. another motor. When the apparatus comprises more than one core, the working liquid may be circulated through each of the cores in sequence for achieving a desired particle size and distribution. The apparatus may be configured such that the working liquid may be directly collected from each of the cores in some examples. It may also be possible to selectively direct and accelerate the working liquid into specific cores, without having to circulate the working liquid through all of the cores available.

The apparatus may be configured to generate hydrogen (H₂) inside it. In some examples, hydrogen gas and nanoparticles may be simultaneously produced. Colliding oxidizable metallic material may activate the material such that the produced nanoparticles are able to react with water molecules, in particular without adding a base such as potassium or sodium hydroxide (KOH and NaOH). Alkaline water, i.e. water in which there is an excess of hydroxide ions (OH⁻) over hydrogen ions (H⁺), may also (but does not need to be) be used. A metallic material herein may include both metals (iron (Fe)), aluminum (Al), calcium (Ca), magnesium (Mg), zinc (Zn)...) and metalloids (e.g. silicon (Si)). The oxidizable metallic material may further comprise a non-metallic element or compound. The oxidizable metallic material may comprise oxygen in some examples. For example, the oxidizable metallic material may be Al₂O₃, FeOz or MgO.

The reaction between a metal and water (any suitable type of water) may produce a hydroxide besides hydrogen gas. For example, for Al, Ca, Mg and Zn the following reactions may occur, respectively: 2*Al* + 6*H*₂*O* → 2*Al*(*OH*)₃ + 3*H*₂*, Mg* + 2*H*₂*O* → *Mg*(*OH*)₂ + *H*₂*, Ca +* 2*H*₂*O* → *Ca*(*OH*)₂ + *H*₂ and *Zn* + 2*H*₂*O* → *Zn*(*OH*)₂ + *H*₂*.* By colliding the metals, or other suitable oxidizable metallic materials, in presence of water, hydroxides may be obtained.

Additives may be added for improving the reaction between the oxidizable metallic material and the water. For example, if the oxidizable metallic material comprises silicon, graphene or activated carbon, this may help to improve the reaction between the material and the water. Such additives may also be included in the oxidizable metallic material. For example, the oxidizable metallic material may include nano-sized activated carbon or graphene. An oxidizable material may herein refer to a material which is capable of removing and capturing oxygen from a water molecule, such that hydrogen is produced in the process. Other additives that may be used are for example iron nanoparticles or nickel (Ni).

The use of nickel may help to weaken the bonds between the hydrogen and the oxygen of the water molecules by bonding to the hydrogen atoms of the water molecules. Nickel may therefore help to promote the reaction between the oxidizable material and the water molecules. Also, nickel may help to break the water molecules, the hydrogen atoms remaining attached to the nickel. Accordingly, the hydrogen production may also be enhanced.

Nickel may be introduced in the core, e.g. in powder form, in some examples. In other examples, nickel may be attached to an inside of the apparatus. For example, strips or other suitable elements comprising nickel, e.g. made of nickel or being coated with nickel, may be attached to the apparatus. A suitable location may be at the outlet of the core, such that the working liquid (water) with oxidizable material of smaller size after traveling through the core may be passed and contacted with the nickel.

Therefore, an oxidizable material may be collided for obtaining nanoparticles which may react with water, for example seawater, without the need to use further chemical elements/compounds. Such a reaction may effectively produce hydrogen. For example, if silicon is used, the nanoparticles of silicon produced may undergo the following reaction: *Si* + 4*H*₂0 → *Si*(*OH*)₄ + 2*H*₂*.* Hydrogen gas is therefore released. The silanol functional groups (Si-OH) of the orthosilicic acid (Si(OH)₄) may then form siloxane bonds (Si-O-Si) and release water: 2*Si*(*OH*)₄ → (*OH*)₃*Si* - *O* - *Si*(*OH*)₃ + *H*₂*O.* Subsequently, the released water molecules may react with the silicon nanoparticles which have not reacted yet, sustaining the production of hydrogen gas until the silicon nanoparticles have been consumed: 4*H*₂*O* + *Si* → *Si*(*OH*)₄ + 2*H*₂*.*

The chemical reactions above may cause the pH to decrease and a decrease in pH can increase the dynamics of the reaction. For example, decreasing a pH below 5 may help to speed up the process as well as to increase the reactivity of the Si nanoparticles. However, this will depend on which additive(s) and in which amount are added (if added at all). It may also be possible that the pH increases in some examples. In some examples, an acidic solution, e.g. comprising orthosilicic acid (Si(OH)₄), may be added to accelerate the process for generating hydrogen gas.

Besides seawater, water such as tap water, deionized water, extra pure water, grey water, waste water, contaminated water, sewage water, water comprising oil or other types of water may be used.

In some examples, hydrogen may be produced in the separator system, for example in a centrifugal separator. The hydrogen may be collected from the top of the centrifugal separator and a remaining liquid may be collected from the bottom of the centrifugal separator. Remaining solid material and working liquid may be directed to the core. Hydrogen may also be produced in, and collected from, the core in some examples.

Although not necessary, a hydroxide compound such as KOH or NaOH may be used to trigger or initiate hydrogen production. This may accelerate the (initiation of the) process, as the reaction between water and the oxidizable metallic nanoparticles will start quicker. As KOH or NaOH may only be used to cause the reaction to initiate, and not to keep the reaction ongoing, a small amount of KOH or NaOH may be sufficient.

Pressure waves generated within the working liquid due to the water hammer effect may rapidly change the speed of the working liquid and create turbulent flows. When the oxidizable material, e.g. Si, is subjected to the pressure waves, the oxidizable material may break and mix effectively with the working liquid, enhancing contact between the oxidizable material and the water. The reaction between the oxidizable material and the water to produce hydrogen gas may be increased, as the oxidizable material would be well dispersed and exposed to the water molecules.

Also, the collapse of the bubbles formed in the working liquid generates localized regions of high pressure and temperature. This high temperature may help to trigger and accelerate the reaction between water and the oxidizable material. The bubble collapse also releases a high amount of energy in the form of shockwaves. This energy may also help to trigger the reaction between the oxidizable material and the water molecules. In some examples, the following reaction may occur due to the high temperature and high pressure conditions: *Si* + 2*H*₂*O* → *SiO*₂ + 2*H*₂. Also, bubble collapse may help to break down the oxidizable material and to expose more surface available for reacting with water.

In addition, bubble collapse may generate strong hydrodynamic shear forces which may remove outer layers of the oxidizable material. The exposed inner layers may react more easily with the water molecules, enhancing the production of hydrogen gas.

Also, pressure waves and bubble collapse may increase the collisions between the oxidizable material, accelerating its rupture into smaller portions.

Water hammer and cavitation effects can work synergistically to create optimal conditions for hydrogen production. Water hammer may induce turbulent flows and mixing of the oxidizable material with water. This may prepare the water and the oxidizable material for receiving the shock waves produced by the bubble collapse. These shoch waves may further enhance mixing and reactivity, creating a beneficial environment for efficiently generating hydrogen gas.

It should also be noted that nanoparticles suitable for producing hydrogen with the apparatus described herein may also be used outside the apparatus. For example, the nanoparticles may be mixed with water, e.g. seawater, for producing hydrogen in a suitable container outside the apparatus. For example, a reactor may be used for producing the hydrogen. The reactor may be operatively connected to the apparatus in some examples.

The apparatus described herein may also be used for other purposes and/for generating other gases besides hydrogen. For example, a gas generated during the process may be or may include syngas, methane (CH₄), carbon monoxide (CO), carbon dioxide (CO₂), oxygen (O₂), hydrocarbon gas, noble gas and others.

For example, the core and apparatus may be configured to produce syngas from coal and water, emulating a water-gas shift reaction. In some examples, a gas such as CO may be added to the water for producing a water-gas shift reaction in which CO reacts with H₂O for producing CO₂ and H₂. Methane (CH₄) and other carbon-based fuels may also be introduced in the apparatus. For example, CH₄ may be added to the water for producing CO₂ and H₂. In other examples, CO₂ may be used, together with water, to produce CO. Syngas may efficiently be generated. Catalysts such as calcium (Ca) and copper-silicon (CuSi) may help to enhance the efficiency of producing CO from CO₂.

The apparatus may therefore be used to generate gases such as syngas or hydrogen in which the nanoparticles obtained may be used subsequently for other applications.

It should be noted that in examples where a gas is added to, or mixed with, the working liquid, the working liquid may comprise the gas before it is introduced in the apparatus, or the gas and the working liquid may be introduced in the apparatus separately and mixed within the apparatus, e.g. in the core. The apparatus may comprise one or more inlets through which one or more gases may be introduced in the apparatus, optionally in the core.

The apparatus described herein may also be used for liquefying coal by hydrothermal liquefaction (HTL). Coal and water may therefore be added to the core of the apparatus. Therein, the coals and the water may be subjected to high pressure and high temperature. This may break the coal into simpler organic compounds, and the solid coal and water may form a coal slurry. The coal may therefore be liquefied. Depending on which additional elements are added with the coal, other products such as biodiesel, e.g. including methanol or ethanol, may be obtained.

As oils and bio oils, e.g. which have already been used in other processes, comprise a significant amount of carbon and hydrogen, adding them with the coil may help to increase the yield of the corresponding product. Catalysts, for example biodiesel or methanol, may help to expedite the liquefaction process and promote the conversion of coal other additional elements into liquid products.

Alcohol sources such as methanol or ethanol may be included in the core with the coal. The high temperature and high pressure inside the core may promote the obtention of liquid fuels including methanol or ethanol.

After HTL, the obtained product, e.g. a slurry, may be refined. Separation techniques, for example distillation, may be used to purify the obtained product.

A core as described herein and an apparatus as described herein may be used to produce nanoparticles. In a further aspect of the invention, a method is provided. The method comprises rotating the first disc and/or the second disc of a core as described throughout this disclosure. The method further comprises introducing a working liquid comprising a solid material into the core. In some examples, the working liquid may be sucked into the core due to the rotation of the first disc and/or the second disc. The method further comprises accelerating the working liquid to cause a cavitation effect and changing flow direction of the working liquid to cause a water hammer effect, such that nanoparticles of the material are produced.

The steps of introducing the working liquid in the core and rotating the first disc and/or the second disc may be performed one after the other or at overlapping periods of time, e.g. simultaneously. For example, one or more discs of the core may be rotated first for helping to introduce the working liquid in the core. But in other examples, the working liquid may be introduced in the core first, and then one or both discs may be rotated.

The working liquid may be water, for example seawater. The material may be an oxidizable metallic material. The method may further comprise generating hydrogen (gas) from the produced nanoparticles, for example in the core of the apparatus or in the centrifugal separator of the apparatus. Nanoparticles from an oxidizable metallic material may react with surrounding water for producing hydrogen.

Particular aspects, examples and elements of aspects or examples disclosed herein can be combined together in any number and order to form new aspects and examples that form part of this disclosure.

### BRIEF DESCRIPTION OF THE DRAWINGS

Figure 1 schematically illustrates a cross-sectional view of an example of a core for accelerating a working liquid comprising a solid material.
Figure 2 schematically illustrates a cross-section of an example of a first disc and a second disc facing each other.
Figure 3 schematically illustrates an enlarged view of a channel portion and a channel of the first disc of figure 2.
Figure 4 schematically illustrates a cross-sectional view of another example of a core.
Figure 5 schematically illustrates a cross-section of another example of a first disc and a second disc facing each other.
Figure 6 schematically illustrates an apparatus comprising a core according to the disclosure.
Figure 7 schematically illustrates another example of an apparatus, the apparatus comprising a plurality of cores.
Figure 8 schematically illustrates a flowchart of a method for producing nanoparticles with an apparatus according to the disclosure.

### DETAILED DESCRIPTION OF EXAMPLES

Reference will now be made in detail to embodiments of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

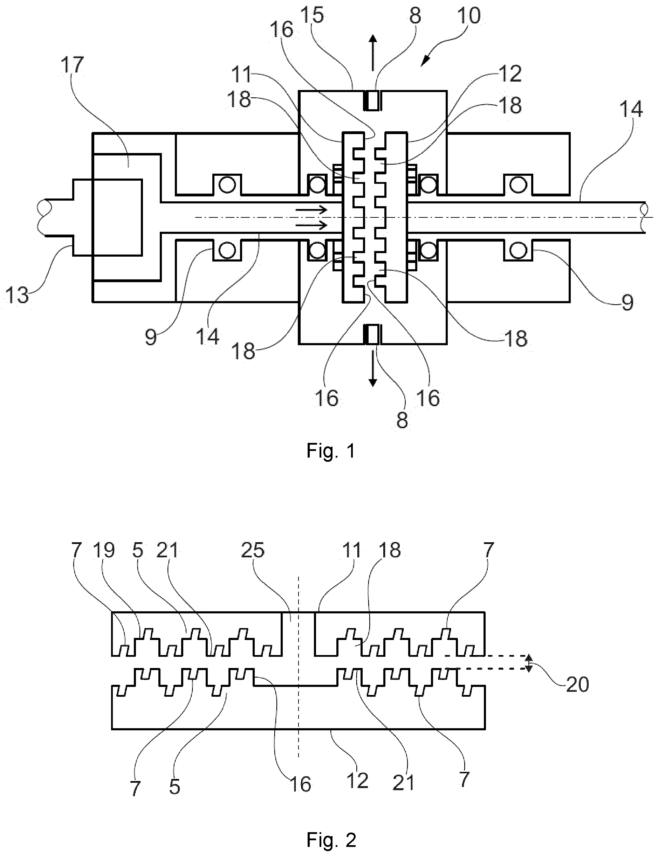

Figure 1 schematically illustrates a cross-sectional view of an example of a core 10 for accelerating a working liquid comprising a solid material, colliding the material with itself, achieving the water hammer effect and the cavitation effect, and producing nanoparticles. Such a core may be used in an apparatus for producing nano particles. The cross-section is taken in a plane which includes the axial and radial directions of the core.

The core 10 comprises a first disc 11 and a second opposite disc 12 facing the first disc 11 in an axial direction. The apparatus in which the core 10 is included comprises one or more drives 13 for rotating the first disc 11 and/or the second disc 12. In the example of this figure, a single drive 13 is illustrated, but another drive for rotating the second disc 12 may also be provided.

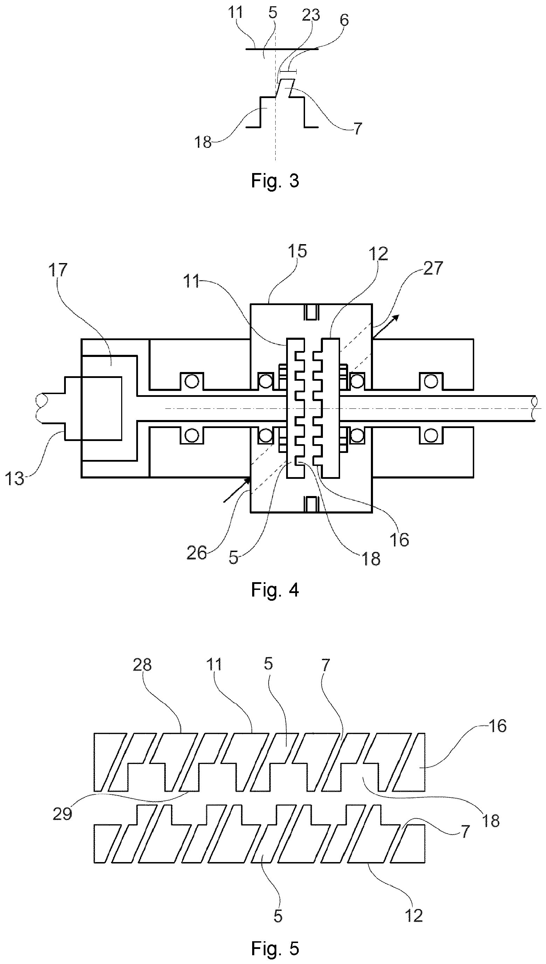

The first disc 11 and the second disc 12 comprise a plurality of concentric rings 16. The first disc 11 and the second disc 12 further comprise a plurality of concentric channels 18 alternately interleaved with the plurality of concentric rings 16. The first disc 11 and the second disc 12 comprise a plurality of holes (not shown in this figure, see e.g. figures 2 and 5) extending from the concentric channels 18 and the concentric rings 16 at an angle of between 2° and 89° with respect to the axial direction, and specifically between 10 and 80° with respect to the axial direction, and more specifically between 20° and 70° with respect to the axial direction.

The concentric rings 16 of the first disc 11 are arranged facing the channels 18 of the second disc 12. The concentric rings 16 of the second disc 12 are arranged facing the channels 18 of the first disc 16.

A gap in an axial direction may be provided between a base of the rings of one disc and a base of the rings of the other disc, see also figure 2. Such a gap may for example be less than 500 microns in some examples.

The core comprises one or more inlets through which the working liquid containing the material, or the material and the working liquid separately, may be introduced.

The core 10 further comprises a housing 15 enclosing at least the first disc 11 and the second disc 12. The housing 15 may form a chamber in which the first disc 11 and the second disc 12 are arranged. Any suitable coupling between the discs 11, 12 and a shaft 14, and between the discs 11, 12 and the housing 15 may be provided.

At least one the discs 11, 12 may be rotatable. Both discs may be rotatable, or one of the discs may be rotatable. If both discs are rotatable, they may be rotated in a same direction or in opposite directions. In the specific disclosed example, both discs are rotated in opposite directions. The objective of the rotation of the disc(s) is to produce a water hammer effect and to create cavitation, and to make the working material (liquid and dispersed or dissolved solid) collide. The collision, shock waves and low pressure areas due to cavitation can break down the solid material, and raise the temperature of the liquid and convert the liquid to gas/steam/vapor.

The drives may be directly or indirectly connected to a corresponding shaft 14. In some examples, connection to a corresponding shaft may be through a hydraulic coupling system, a pneumatic system or a non-contact system such as a magnetic coupling system. In the example of figure 1, a magnetic coupling 17 is provided between the drive 13 and the shaft 14. Bearings 9, for example ceramic bearings, may be provided. A drive 13 may be provided for rotating the shaft 14, and therefore rotating the corresponding disc.

In some examples, the drive 13 may be an electric motor. The motor may be AC motor, a brushless DC electric motor, or in general any suitable motor for rotating the shaft 14. Other suitable actuators for rotating the shaft 14 at high speed may alternatively be provided. In some examples, a gas turbine, an air turbine or a steam turbine may be used as a drive. The one or more drives 13 may be arranged outside the core 10 and the coupling with the shaft 14 may be a non-contact coupling, e.g. magnetic, so as to avoid or at least reduce any contamination of the drive 13.

In the example of figure 1, the first disc 11 and the second 12 disc are arranged in a horizontal configuration (rotation about a horizontal axis, the axial direction is parallel to a horizontal direction). In other examples, the first 11 and second 12 discs may be arranged in a vertical configuration (rotation about a vertical axis), or in a different configuration.

In the example of figure 1, the first disc 11 comprises a central opening through which material can be introduced, e.g. sucked, into the core 10. The second disc 12 does not include such opening in this example, but it may include it in other examples. In figure 1, the core 10 comprises two exits 8 for the working liquid. In particular, the working liquid may be output along a radial direction of the core. In other examples, more or less exits may be provided, and the exits may be provided in any suitable location of the housing of the core.

Figure 2 schematically illustrates a cross-section of an example of the first disc 11 and the second disc 12 facing each other. The rings 16 and the channel portions 5 of the discs 11, 12 comprise holes 7. In this example, the holes 7 are blind holes. The holes 7 are also inclined with respect to the axial direction. The first disc 11 includes a central opening 25 through which the working liquid is to be introduced between the first disc 11 and the second disc 12.

The rings 16 comprise a ring base 21 and side walls. The holes 7 open in the ring bases 21. The channels 18 include a channel base 19 and side walls. The channel bases 19 of a disc are offset from the ring bases 21 of the disc along an axial direction of the disc, and therefore the core 10. A side wall of a ring 16 and a side wall of a channel 18 may be shared, i.e. a single wall may form the side wall of the ring 16 and of the adjacent channel 18.

The ring bases 21 of the first disc 11 are offset 20 from the ring bases 21 of the second disc 12 along the axial direction of the discs. The gap 20 between both discs may be set appropriately for operation. The size of the gap 20 may for example be set depending on the material to be processed, the size of this material and the desired material after processing. In some examples, the gap 20 may be between 420 and 1000 microns. If the apparatus comprises a plurality of cores, a gap 20 between a pair of discs may reach 4 mm, e.g. for the first pair of discs through which the material is passed through.

Figure 3 schematically illustrates an enlarged view of a channel portion 5 and a channel 18 of the first disc 11. The hole 7 forms an angle 23 with respect to the axial direction. In general, the holes 7 of the discs form an angle between 2° and 89° with the axial direction. An angle 23 between 20° and 80°, and specifically between 25° and 75°, e.g. about 72 °, may be particularly suitable for achieving and enhancing the water hammer and cavitation effects. The angle 23 chosen may depend on the size of the material to be introduced in the core of the apparatus, on the desired size of the material after processing as well on the specific material to be processed.

The holes may have a substantially elliptical cross-section. This cross-section refers to a cross-section perpendicular to the axial direction of a disc. An elliptical cross-section of the holes 7 may be particularly suitable for achieving and enhancing the water hammer and cavitation effects. Other shapes of a cross-section of a hole 7 may be possible. For example, a cross-section of a hole 7 may be oval, elliptic, oblong or circular in some examples.

In some examples, blind holes 7 may have a depth between 2 mm to 12 mm. The blind holes 7 may in some examples be cone-shaped or semi-spherical. A (smallest) radius of the blind holes 7 may be above 2 mm. The dimensions of the blind holes, and in general of the holes regardless they are blind or not, may depend on the size (diameter and thickness) of a disc. Therefore, the dimensions of the holes may vary for discs having different sizes.

In cross-section, e.g. in a cross-section perpendicular to the radial direction, the inner dimensions of the hole 7, e.g. a width 6 of a hole 7 may be constant throughout its length, see e.g. figures 2 and 3. The walls defining a hole 7 may be straight. In other examples, a size, e.g. a width 6 of a hole 7, may decrease. For example, a size of the holes 7 of the first 11 and/or the second 12 disc may decrease from a most radially inner portion towards a most radially outer portion of the respective disc.

In general, the shape and dimensions of the holes 7 may be adapted to the working liquid to be used, and in particular to the type and size of the solid material mixed with the working liquid.

The shape and internal dimensions of the holes 7, an angle of inclination of the holes 7 with respect to an axial direction and a pitch between the holes of a same ring 16 or channel portion 5 may be adapted for each ring 16 and channel portion 5. In particular, these parameters may be varied considering that a speed of a hole increases with an increasing distance to the center of the disc. For example, a pitch of the holes 7 of the first 11 and/or the second disc 12 may increase from a radially most inner portion towards a radially most outer portion of the respective disc.

Also, a size of the holes (in particular in cross-section, e.g. an internal radius of the hole) of the first 11 and/or the second 11 disc may decrease from a most radially inner portion towards a most radially outer portion of the respective disc.

Figure 4 schematically illustrates a cross-sectional view of another example of a core 10. In this example, the holes are through holes such that the working liquid can flow axially through the first disc 11 and the second disc 12. As the holes are through holes, the working liquid may be inputted to the core 10 through a portion of the housing 15. For example, the housing may have an inlet 26 at an axial side of the housing for introducing the working liquid. The housing may have an outlet 27 at an opposite axial side of the housing for removing the working liquid with the material of a smaller size. As shown in the example of figure 4, the inlet 26 and the outlet 27 may also be at opposite radial sides of the core, although this may be different in other examples.

Figure 5 schematically illustrates a cross-section of another example of a first disc 11 and a second disc 12 facing each other. The rings 16 and the channel portions 5 of the discs 11, 12 comprise holes 7. In this example, the holes 7 are through holes. Therefore, the holes extend from an axial surface 28 of a disc to an opposite axial surface 29 of the disc. The holes 7 are also inclined with respect to the axial direction.

Regardless of whether the holes 7 are blind holes or through holes, in some examples the first disc 11 and the second disc 12 may comprise, e.g. may be made of, a ceramic material. The first and the second disc may be coated with a ceramic material in some examples. This may help to operate with materials which may exhibit magnetism. The discs may e.g. have a disc body made of steel, such as stainless steel, and a ceramic coating. In other examples, other materials for the disc body and for a coating, if present, may be used. For example, a disc may include a wolfram carbide coating in some examples.

During operation, the core may reach high temperatures, for example temperatures above 100 °C. A cooling system may be provided for cooling the core 10. For example, the housing may include conduits through which a suitable cooling fluid may be circulated.

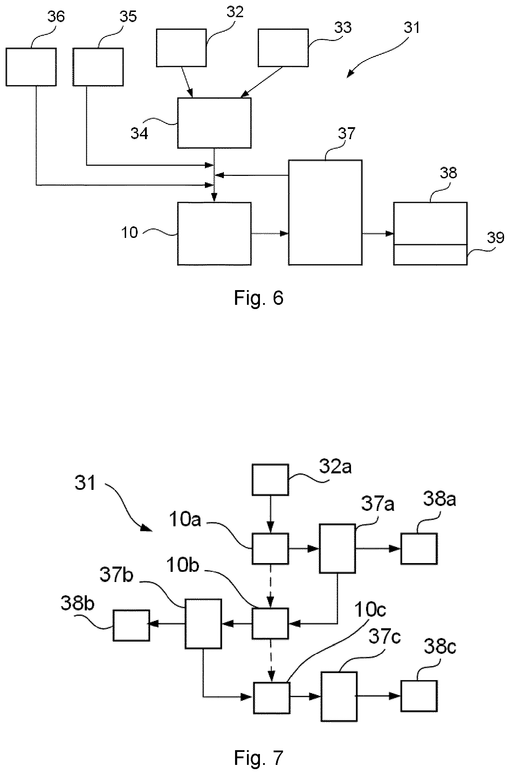

The core 10 may be incorporated in an apparatus. According to a further aspect, an apparatus for obtaining particles from a material is provided. A schematic example of an apparatus is provided in figure 6.

The apparatus 31 comprises a core 10 as described throughout this disclosure and one or more inlets for introducing the working liquid and the material in the apparatus, either already mixed or separately, before they are mixed. In the example of figure 6 the working liquid and the material are introduced separately, see the two separate containers 32, 33 for the working liquid and the material. The material may be provided in powder form in some examples. The apparatus may further comprise a mixing chamber 34 for mixing the material and the working liquid. Mixing may be performed with any suitable mixing element, e.g. any suitable stirrer, optionally a magnetic stirrer.

The apparatus 31 may be configured to dose the working liquid containing the material to be introduced in the core 10. The apparatus 31 may comprise a suitable system for dosing the working liquid. For example, one or more valves may be used. The apparatus may further comprise valves in other portions of the apparatus for regulating the flow of the working liquid through the apparatus.

The apparatus may comprise a system for introducing one or more fluids for controlling, e.g. setting, an atmosphere within a path of the apparatus through which the material is to travel. For example, the system may be configured to introduce a fluid in the apparatus for modifying an atmosphere within the apparatus. A fluid such as nitrogen (gas) may help to maintain a controlled level of oxygen during the production of the nanoparticles. A fluid such as argon (gas) may help to create a controlled environment for certain processing conditions. Other suitable fluids may be used. For example, the system may be configured to provide liquid nitrogen, which may help to achieve low temperatures. In some examples, the system may comprise a vacuum pump for creating vacuum conditions. The example of figure 6 schematically illustrates a storage container 35 for a fluid and a vacuum pump 36.

The fluid may be introduced into different portions of the apparatus 31. For example, the fluid may be introduced in a conduit of the apparatus or in another portion of the apparatus. The fluid may also be directly introduced in the core 10.

Conditioning of the atmosphere may be provided before the working liquid containing the material is introduced into the core 10 for the first time at least in some examples. In some examples, vacuum may be performed, and then a fluid such as nitrogen or argon may be introduced in the apparatus 31. The working liquid may be introduced in the apparatus once a desired atmosphere has been created. For example, one or more fluids may be introduced in the apparatus, e.g. in a conduit thereof, for controlling an atmosphere through the travel path of the working liquid containing material. And optionally a same or different fluid may be directly introduced in the core 10 once the working material is inside the apparatus, e.g. inside the core.

As previously indicated, the apparatus 31 may also comprise one or more drives 13 for rotating at least one of the first disc 11 and the second disc 12. A drive may for example be a motor.

The apparatus 31 may further comprise a system for generating an under pressure for removing the working liquid with material of smaller size from the core 10. In particular, the system may be configured to create an under pressure in an outlet of the core 10.

The material of smaller size may be separated from the working liquid after leaving the core 10. The apparatus 31 may comprise a system 37 for separating the solid material from the working liquid. An example of such a system may be a centrifugal separator. Other suitable systems may be used. It is to be noted that the liquid may have been completely or to a large extent have been converted to gas.

System 37 may be configured to separate material by size or density in some examples. The system 37 may separate the solid material within the working liquid in two or more groups according e.g. to size of the components of the material.

In some examples, the system 37 for separating the solid material from the working liquid and the system for generating an under pressure for removing the working liquid with the solid material from the core 10 may be the same.

After leaving the core 10, the solid material may comprise a portion of nanoparticles which have a desired size and are therefore ready to be collected, and may comprise a portion of nanoparticles or material of a bigger size which has not yet reached the desired size. In some examples, the nanoparticles which are ready may be directly removed from the apparatus 31. In other examples, the apparatus 31 may comprise a system 38 configured to collect the nanoparticles which have reached a desired size. Such a collection system 38 may comprise an element configured to suck the nanoparticles towards an inside of the system 38. The nanoparticles may for example go from the centrifugal separator 37 to the collection system 38. The system 38 may comprise a storage element 39, from which the nanoparticles may be removed. In some examples, the storage element 39 may be removable from the collecting system 38.

The portion of the solid material which has not reached a desired size may be directed to the core 10 to be collided again, e.g. from the centrifugal separator 37. The apparatus 31 may be configured to this end. The working liquid may also be directed to the core 10 after it has been separated from the solid material.

In some examples, the produced nanoparticles may be processed further after they have been produced. In other examples, they may be directly packed after their production. The apparatus 31 may comprise a suitable system for packing the produced nanoparticles in a suitable manner. For example, the apparatus 31 may comprise a container-based system, including for example glow boxes, for packing the produced material. In some examples, the apparatus may be arranged in a clean room. The clean room may comprise one or more systems for controlling the quality of the air, for example for filtering the air. Blankets such as water blankets may be provided for air filtration.

The apparatus may further comprise a plurality of valves. The valves may regulate the passage of the working fluid through a path of the apparatus. The apparatus may further comprise one or more pumps for moving the working fluid through the apparatus. For example, centrifugal pumps, membrane pumps and/or tesla pumps may be used.

The apparatus may further comprise one or more heaters such as microwave heaters, plasma heaters or induction heaters. In some examples, one or more heaters may be provided in the separator system 37 for helping to dry the solid material.

An apparatus may comprise more than one core. Figure 7 schematically illustrates an example of an apparatus 31 which comprises a plurality of cores 10, in particular three cores. Therefore, three stages may be provided: at the first stage, the working liquid comprising material is introduced into a first core 10a. Once the material has been made smaller, the working liquid is introduced into a first centrifugal separator 37a. The solid material which has a desired size is collected at a first collector system 38a. At the second stage, the solid material from the first stage which has not achieved a desired size and remaining working liquid are introduced into a second core 10b. The working liquid with the solid material is then passed through a second centrifugal separator 37b. The solid material which has reached a desired size is collected at a second collector system 38b. And at the third stage, the solid material not yet having a desired size is introduced into a third core 10c with remaining working liquid from the centrifugal separator 37b. The solid material is then separated from the working liquid once more in a third centrifugal separator 37c. The solid material which is ready is collected in a third collector system 38c. A plurality of drives such as electric motors may be used for rotating the first and second discs of each core.

The working liquid may be circulated through all or less of the available cores. Also, if necessary, after been circulated through all the available cores, the working liquid may be circulated through one or more of them again. Likewise, nanoparticles may be collected after passing the working liquid through a corresponding core. But this may not be necessary. For example, the working liquid may be circulated through more than one core before nanoparticles are collected (see for example the dashed lines of figure 7).

The apparatus 31 may include or may be connected with one or more storage containers 32a that store the working liquid and the material, either jointly or separately. In the example of figure 7, a single container 32a including the working liquid and the material is provided.

One or more of the centrifugal separators 37a, 37b, 37c or e.g. an additional centrifugal separator arranged after the third centrifugal separator 37c, may comprise a plurality of ultrasound generators. The ultrasound generated by the ultrasound generators may help to palletize the produced nanoparticles. A pallet may have dimensions of a few microns, e.g. a length of a pallet may be below 20 microns in some examples. A plurality of pallets may be stored in a cartridge.

The apparatus 31 may further comprise a plurality of sensors, for example flow sensors, temperature sensors, humidity sensors, pressure sensors and rotational speed sensors. The operation of the sensors may be controlled using a sensor control system. A control unit may control the operation of the apparatus 31 during the production of nanoparticles based on real-time data obtained by the sensors.

Aspects of the apparatus of figure 7 may be applied and combined with the apparatus of figure 6, and *vice versa.* For example, one or more ultrasound generators may be included in the apparatus of figure 6 for palletizing the produced nanoparticles. Or one or more tanks with fluids for e.g. conditioning the atmosphere inside the apparatus may also be provided in the apparatus of figure 7.

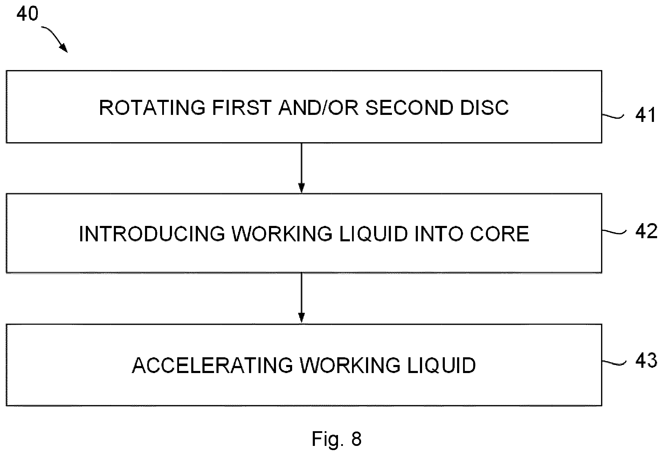

A core as described herein and an apparatus as described herein may be used to produce nanoparticles. In another aspect, a method is provided. The method is schematically illustrated in the flowchart of figure 8. The explanations and details provided before with respect to the core and the apparatus can be applied to the method, and *vice versa.*

The method 40 comprises, at block 41, rotating the first disc 11 and/or the second disc 12 of a core 10 as described throughout this disclosure. The method further comprises, at block 42, introducing a working liquid comprising a solid material into the core 10. The method further comprises, at block 43, accelerating the working liquid to cause a cavitation effect and changing flow direction of the working liquid to cause a water hammer effect such that nanoparticles of the material are produced.

The collisions between the solid material as well as the pressure waves and bubble collapse due to the water hammer and cavitation effects may help to effectively obtain material of smaller size, an in particular nanoparticles.

The steps of introducing 42 the working liquid in the core 10 and rotating 41 the first disc 11 and/or the second disc 12 may be performed one after the other or at overlapping periods of time, e.g. simultaneously. For example, one or more discs of the core may be rotated first for helping to introduce the working liquid in the core. But in other examples, the working liquid may be introduced in the core first, and then one or both discs may be rotated.

As previously explained, an apparatus 31 may be used for producing hydrogen gas. Therefore, the working liquid may be water, e.g. seawater, and the material may be an oxidizable metallic material.

This written description uses examples to disclose a teaching, including the preferred embodiments, and also to enable any person skilled in the art to put the teaching into practice, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques within the scope of this disclosure. If reference signs related to drawings are placed in parentheses in a claim, they are solely for attempting to increase the intelligibility of the claim, and shall not be construed as limiting the scope of the claim.

## Claims

1. An apparatus for producing nanoparticles of a material mixed in a working liquid, the apparatus comprising:
one or more inlets for introducing the working liquid containing the material or the material and the working liquid separately into the apparatus;
a core for accelerating the working liquid containing the material to cause a cavitation effect and changing flow direction of the working liquid to cause a water hammer effect for producing nanoparticles of the material, wherein the core comprises a first disc and a second disc facing the first disc in an axial direction, and wherein the apparatus comprises one or more drives for rotating the first disc and/or the second disc, and the first disc and the second disc comprising:
a plurality of concentric rings;
a plurality of concentric channels alternately interleaved with the plurality of concentric rings;
wherein the first disc and the second disc comprise a plurality of holes extending from the concentric channels and the concentric rings at an angle of between 2° and 89° with respect to the axial direction;
wherein the concentric rings of the first disc are arranged facing the channels of the second disc; and
wherein the concentric rings of the second disc are arranged facing the channels of the first disc.

2. The apparatus of claim 1, wherein the holes have a substantially elliptical cross-section.

3. The apparatus of claim 1 or claim 2, wherein the holes extend at an angle of between 20 and 80° with respect to the axial direction, and specifically at an angle between 25° and 75°.

4. The apparatus of any of claims 1-3, wherein the holes are blind holes and optionally wherein the first disc and/or the second disc further comprise an opening close to a center of the corresponding disc for introducing the working liquid between the first disc and the second disc.

5. The apparatus of any of claims 1-3, wherein the holes are through holes.

6. The apparatus of any of claims 1-5, wherein the drives are configured to rotate the first disc in a first direction and the second disc in a second direction opposite to the first direction.

7. The apparatus of any of claims 1 - 6, further comprising a separator system for separating the material from the working liquid.

8. The apparatus of claim 7, further comprising a collector system configured to collect the produced nanoparticles after separation of the nanoparticles from the working liquid.

9. The apparatus of any of claims 1-8, wherein a pitch of the holes of the first and/or the second disc increases from a radially most inner portion towards a radially most outer portion of the respective disc.

10. The apparatus of any of claims 1-9, wherein a size of the holes of the first and/or the second disc decreases from a most radially inner portion towards a most radially outer portion of the respective disc.

11. The apparatus of any of claims 1 - 10, wherein the first disc and the second disc comprise, in particular are made of, a ceramic material.

12. A method comprising:
rotating the first disc and/or the second disc of the core of any of claims 1-11;
introducing a working liquid comprising a solid material into the core;
accelerating the working liquid to cause a cavitation effect and changing flow direction of the working liquid to cause a water hammer effect such that nanoparticles of the material are produced.

13. The method of claim 12, wherein the material is an oxidizable metallic material.

14. The method of any of claims 12 or 13, wherein the working liquid is water, in particular seawater.

15. The method of claim 14, further comprising generating hydrogen gas.
